# FASCICULE DE BREVET EUROPEEN

(11) **EP 0 702 385 B1**
(45) Date de publication et mention de la délivrance du brevet: **12.07.2000**
(21) Numéro de dépôt: 95401949.3
(22) Date de dépôt: 24.08.1995
(51) Int. Cl.: H01H 25/00, G05G 9/047, G06K 11/18

(54) **Dispositif de commande manuel multifunction**
Manuelles Mehrfunktionssteuergerät
Manual multi-function control device

(30) Priorité: 19.09.1994 FR 9411137
(43) Date de publication de la demande: 20.03.1996
(73) Titulaire: AUTOMOBILES PEUGEOT, 75116 Paris (FR); AUTOMOBILES CITROEN, 92200 Neuilly-sur-Seine (FR)
(72) Inventeur: Haugomat, Gilles, F-93250 Villemomble (FR); Deredec, Jean-François, F-92250 La Garenne-Colombes (FR)
(74) Mandataire: Habasque, Etienne Joel Jean-François

(56) Documents cités:
- EP-A- 0 056 315
- EP-A- 0 556 936
- DE-A- 3 541 757
- FR-A- 1 151 180
- US-A- 3 980 848
- MOTOROLA TECHNICAL DEVELOPMENTS, vol. 17, 1 Décembre 1992 pages 48-50, LLOYD R D 'FOUR-WAY MULTI-DIRECTIONAL SLIDE SWITCH'
- PATENT ABSTRACTS OF JAPAN vol. 016 no. 170 (E-1194) ,23 Avril 1992 & JP-A-04 017227 (TANE CHIBA) 22 Janvier 1992,

## Description

La présente invention concerne un actionneur multifonctions selon le préambule de la revendication 1. Un tel actionneur est décrit par exemple dans DE-A-3 541 757.

L'intégration de plus n plus importante d'organes fonctionnels à bord des véhicules automobiles entraine une augmentation correspondante du nombre d'actionneurs ou d'organes de commande de ceux-ci.

On peut ainsi constater l'actuelle abondance de touches et boutons dédiés à une fonction bien particulière du véhicule, par exemple pour la commande des paramètres de contrôle des autoradios, tels que le volume, les fréquences, etc..., des systèmes de climatisation, des organes d'orientation des rétroviseurs, des organes de réglage des sièges, etc..

Par ailleurs, l'intégration de plus en plus croissante de systèmes d'assistance à la conduite des véhicules, engendrera une augmentation extrêmement importante du nombre de ces boutons et touches.

Cette prolifération d'organes de commande présente un certain nombre d'inconvénients notamment au niveau de leur complexité d'utilisation et de leur encombrement.

Le but de l'invention est donc de résoudre ces problèmes en en proposant un actionneur multifonctions.

A cet effet, l'invention a pour objet un actionneur multifonctions, du type comportant un organe de manoeuvre rélié à un équipage mobile déplaçable à coulissement transversal dans un logement d'une embase, munie en regard de l'équipage mobile, de contacts de fin de course actionnables par l'équipage mobile lors de ses déplacements, l'équipage mobile comporte un organe de commande rotatif relié à l'organe de manoeuvre, l'équipage mobile présente une forme polygonale, le logement de l'embase présente une forme complémentaire et porte en regard d'au moins certains des côtés de l'équipage mobile, les contacts de fin de course, et comporte des moyens élastiques de rappel de l'équipage mobile en position centrale dans le logement de l'embase.

L'équipage mobile présente une forme polygonale et avantageusement octogonale.

L'invention sera mieux comprise à l'aide la description qui va suivre, donnée uniquement à titre d'exemple et faisant référence aux dessins annexés, sur lesquels :
- La figure 1 représente une vue de côté en coupe d'un actionneur multifonctions selon l'invention,
- La figure 2 représente une vue schématique d'un équipage mobile entrant dans la constitution d'un actionneur multifonctions selon l'invention,
- La figure 3 représente une vue de dessus en coupe illustrant un équipage mobile et une embase entrant dans la constitution d'un actionneur multifonctions selon l'invention;
- La figure 4 illustre un panneau de pilotage d'un autoradio de l'état de la technique; et
- La figure 5 illustre un tel panneau avec un actionneur multifonctions selon l'invention.

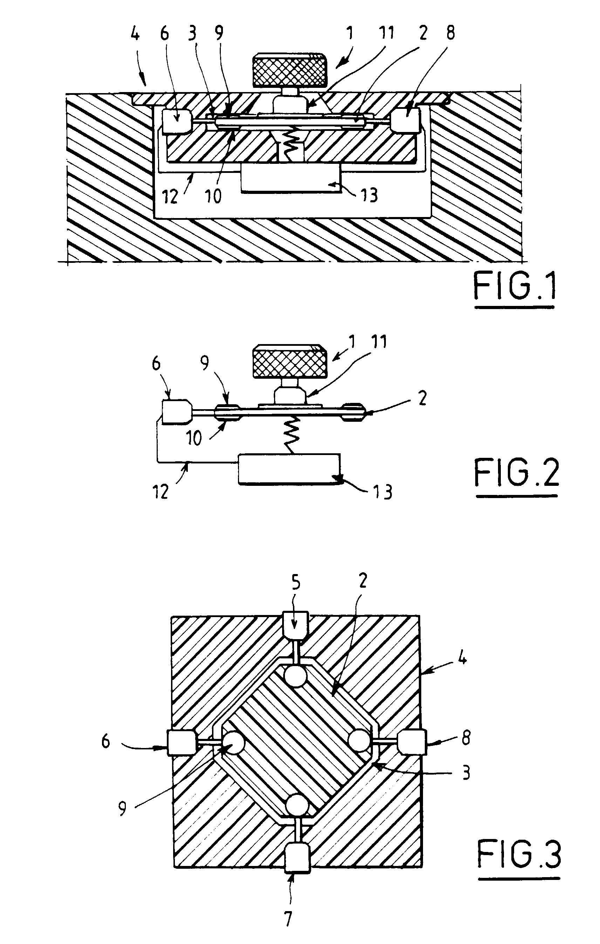

Ainsi qu'on peut le voir sur les figures 1 à 3, un actionneur multifonctions selon l'invention comporte un organe de manoeuvre désigné par la référence générale 1 sur ces figures.

Cet organe de manoeuvre est relié à un équipage mobile désigné par la référence générale 2 déplaçable à coulissement transversal dans un logement 3 d'une embase 4 munie en regard de cet équipage mobile, de contacts de fin de course actionnables par l'équipage mobile lors de ses déplacements.

Dans l'exemple de réalisation représenté sur ces figures, l'équipage mobile présente une forme polygonale et de préférence octogonale tandis que le logement de l'embase présente une forme complémentaire.

Cette embase porte, comme on peut le voir plus particulièrement sur la figure 3, en regard d'au moins certains des côtés de l'équipage mobile, les capteurs ou contacts de fin de course désignés par les références générales 5, 6, 7 et 8 respectivement.

Ces capteurs de fin de course présentent une structure générale classique, à savoir qu'ils sont munis chacun, par exemple, d'un interrupteur de fin de course actionné par une tige de manoeuvre déplaçable par l'équipage mobile lors de ses déplacements dans le logement de l'embase.

Dans l'exemple de réalisation réprésentée sur ces figures, ces contacts de fin de course sont disposés à 90° les uns par rapport aux autres dans l'embase.

Ils sont donc actionnables lors de déplacements correspondants de l'équipage mobile par l'intermédiaire de l'organe de manoeuvre sous la commande d'un utilisateur.

De plus, l'équipage mobile peut comporter sur chacune de ses faces des patins de glissement désignés par exemple par les références 9 et 10.

Ceci permet de faciliter les déplacements transversaux de cet équipage mobile dans le logement correspondant de l'embase.

Par ailleurs, cet équipage mobile peut également comporter dans sa partie centrale, un organe de commande rotatif à rotation libre ou à butée, par exemple potentiométrique et/ou un interrupteur à déplacement axial, reliés à cet organe de manoeuvre.

Cet organe de commande et/ou cet interrupteur à déplacement axial sont désignés par la référence générale 11 sur ces figures 1 à 3.

Ces organe de commande et/ou interrupteur étant bien connus dans l'état de la technique, on ne les décrira pas plus en détail par la suite.

On notera cependant que le fonctionnement de l'organe de commande potentiométrique est contrôlé par une rotation de l'organe de manoeuvre tandis que l'interrupteur à déplacement axial est commuté dans une position ou l'autre par déplacement axial de l'organe de manoeuvre, sous l'action de l'utilisateur.

Par ailleurs, l'organe de manoeuvre peut également comporter une molette qui peut par exemple être à crans, pour donner à l'utilisateur une bonne sensation de rotation.

Des moyens de rappel de l'équipage mobile en position centrale dans l'embase sont également prévus.

Ces moyens de rappel peuvent par exemple être constitués par des ressorts de rappel des capteurs de fin de course ou encore par des moyens élastiques de rappel interposés entre l'embase et cet équipage mobile et plus particulièrement par exemple entre cette embase et les côtés de cet équipage mobile entre les capteurs de fin de course.

Les différents organes électriques tels que les capteurs de fin de course, l'organe de commande potentiométrique et/ou l'interrupteur à déplacement axial sont reliés par l'intermédiaire de câbles électriques désignés par la référence générale 12 par exemple sur ces figures, à un connecteur désigné par la référence générale 13.

De préférence, on utilisera une nappe souple de conducteurs pour raccorder l'équipage mobile au connecteur afin d'éviter le cisaillement ou l'arrachement de celui-ci lors des déplacements de cet équipage mobile.

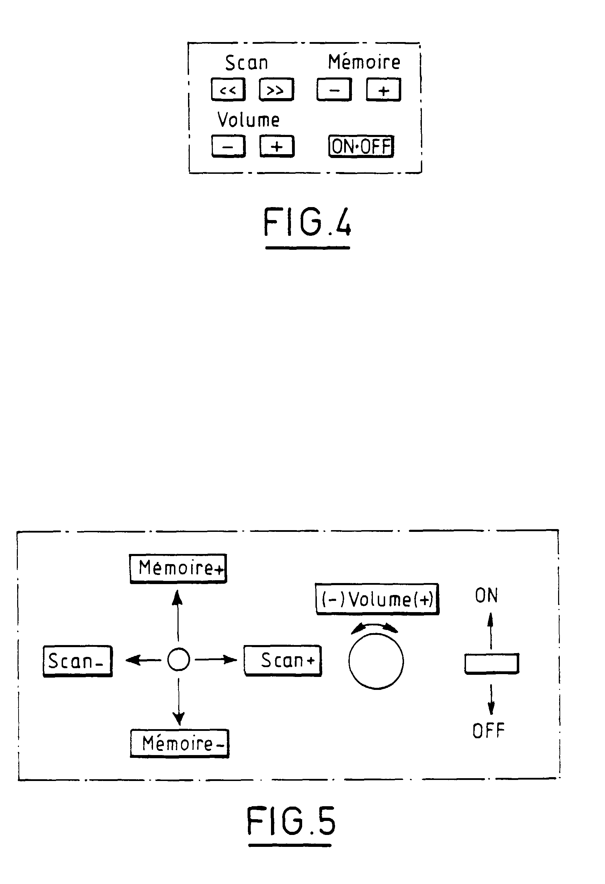

Sur la figure 4, on a représenté un panneau classique de commande des paramètres d'un autoradio.

Celui-ci comporte de manière classique, par exemple, sept boutons-poussoirs, l'un de contrôle de la mise en marche ou de l'arrêt de celui-ci, deux pour le contrôle du volume sonore, deux pour le contrôle de la mémoire et deux pour le contrôle du balayage des stations.

Ces sept boutons-poussoirs peuvent être remplacés avantageusement par un seul actionneur multifonctions selon l'invention, l'interrupteur à déplacement axial faisant office d'interrupteur de mise en marche ou d'arrêt de l'autoradio, le potentiomètre rotatif permettant un réglage du volume sonore de celui-ci et des déplacements vers le haut et vers le bas, ou vers la droite et vers la gauche de l'organe de manoeuvre, provoquant la commande de la mémoire et du balayage respectivement par les capteurs de fin de course correspondants.

On conçoit alors que l'utilisateur n'a plus à sa disposition qu'un seul actionneur lui permettant de piloter les différentes fonctions remplies par l'organe fonctionnel correspondant du véhicule au lieu de plusieurs boutons-poussoirs.

On constate que par l'intermédiaire de différents axes de commande sur un même actionneur, on obtient une plus grande richesse dans la manière de sélectionner ou de valider les informations exploitables par de nombreux organes actuels et futurs au sein des véhicules automobiles.

Ce genre d'actionneur peut alors permettre la centralisation sur un intrument de plusieurs systèmes de commande et par là même de réduire la place nécessaire à l'interfaçage de l'instrumentation de bord du véhicule.

Il va de soi bien entendu que différentes applications de cet actionneur multifonctions peuvent être envisagées. En effet outre le réglage des paramètres de l'autoradio d'un véhicule automobile, il est également possible de commander les moyens de climatisation de celui-ci, l'orientation des rétroviseurs ou encore le réglage des sièges, etc...

De plus, des applications aux radiotéléphones, aux réglages de la consigne de vitesse des véhicules ou encore à l'entrée d'informations dans les systèmes d'aide à la navigation des véhicules peuvent être également envisagées.

## Revendications

1. Actionneur multifonctions, du type comportant un organe de manoeuvre (1) relié à un équipage mobile (2) déplaçable à coulissement transversal dans un logement (3) d'une embase (4), munie en regard de l'équipage mobile, de contacts de fin de course (5,6,7,8) actionnables par l'équipage mobile lors de ses déplacements, caractérisé en ce que l'équipage mobile (2) comporte un organe de commande rotatif (11) relié à l'organe de manoeuvre, en ce que l'équipage mobile présente une forme polygonale, en ce que le logement (3) de l'embase (4) présente une forme complémentaire et porte en regard d'au moins certains des côtés de l'équipage mobile, les contacts de fin de course (5,6,7,8), et en ce qu'il comporte des moyens élastiques de rappel de l'équipage mobile en position centrale dans le logement de l'embase (4).

2. Actionneur multifonctions selon la revendication 1, caractérisé en ce que l'équipage mobile présente une forme octogonale.

3. Actionneur multifonctions selon l'une quelconque des revendications précédentes, caractérisé en ce que l'équipage mobile (2) comporte un interrupteur à déplacement axial (1) relié à l'organe de manoeuvre.

4. Actionneur multifonctions selon l'une quelconque des revendications précédentes, caractérisé en ce que l'organe de manoeuvre comporte une molette (1).

5. Actionneur multifonctions selon la revendication 4, caractérisé en ce que la molette est à crans.

6. Actionneur multifonctions selon l'une quelconque des revendications précédentes, caractérisé en ce que les moyens de rappel sont formés par des ressorts de rappel des contacts de fin de course (5,6,7,8).

7. Actionneur multifonctions selon l'une quelconque des revendications 1 à 5, caractérisé en ce que les moyens de rappel sont formés par des moyens élastiques interposés entre l'embase (4) et l'équipage mobile (2).

8. Actionneur multifonctions selon l'une quelconque des revendications précédentes, caractérisé en ce que l'équipage mobile comporte sur chacune de ses faces des patins de glissement (9,10).

## Patentansprüche

1. Multifunktionale Betätigungsvorrichtung des Typs, der ein Bedienungsorgan (1) aufweist, das mit einer beweglichen Anordnung (2) verbunden ist, die in einem Aufnahmesitz (3) einer Fußplatte (4) transversal gleitend verschiebbar ist, wobei die Fußplatte (4) gegenüber der beweglichen Anordnung mit Bahnende-Kontakten (5, 6, 7, 8) versehen ist, die durch die bewegliche Anordnung bei ihren Verschiebungen betätigt werden können, dadurch gekennzeichnet, daß die bewegliche Anordnung (2) ein drehbares Steuerorgan (11) aufweist, das mit dem Bedienungsorgan verbunden ist, daß die bewegliche Anordnung eine Polygonform besitzt, daß der Aufnahmesitz (3) der Fußplatte (4) eine komplementäre Form besitzt und wenigstens gegenüber bestimmten der Seiten der beweglichen Anordnung die Bahnende-Kontakte (5, 6, 7, 8) trägt und daß sie elastische Mittel für die Rückstellung der beweglichen Anordnung in die Mittelposition im Aufnahmesitz der Fußplatte (4) aufweist.

2. Multifunktionale Betätigungsvorrichtung nach Anspruch 1, dadurch gekennzeichnet, daß die bewegliche Anordnung eine achteckige Form besitzt.

3. Multifunktionale Betätigungsvorrichtung nach einem der vorhergehenden Ansprüche, dadurch gekennzeichnet, daß die bewegliche Anordnung (2) einen mit dem Bedienungsorgan verbundenen Axialverschiebungs-Ein/Aus-Schalter (1) aufweist.

4. Multifunktionale Betätigungsvorrichtung nach einem der vorhergehenden Ansprüche, dadurch gekennzeichnet, daß das Bedienungsorgan ein Rad (1) aufweist.

5. Multifunktionale Betätigungsvorrichtung nach Anspruch 4, dadurch gekennzeichnet, daß das Rad Einkerbungen aufweist.

6. Multifunktionale Betätigungsvorrichtung nach einem der vorhergehenden Ansprüche, dadurch gekennzeichnet, daß die Rückstellmittel durch Rückstellfedern der Bahnende-Kontakte (5, 6, 7, 8) gebildet sind.

7. Multifunktionale Betätigungsvorrichtung nach einem der Ansprüche 1 bis 5, dadurch gekennzeichnet, daß die Rückstellmittel aus elastischen Mitteln gebildet sind, die zwischen die Fußplatte (4) und die bewegliche Anordnung (2) eingesetzt sind.

8. Multifunktionale Betätigungsvorrichtung nach einem der vorhergehenden Ansprüche, dadurch gekennzeichnet, daß die bewegliche Anordnung auf jeder ihrer Flächen Gleitkufen (9, 10) aufweist.

## Claims

1. Multifunctional actuator, of the type including a handling mechanism (1) linked to a moving armature (2) moveable by transversal sliding in a housing (3) of a base (4), equipped in regards to the moving armature, with end of stroke contacts (5,6,7,8) actuated by the moving armature during its movement, characterised in that the moving armature (2) includes a rotating control mechanism (11) linked to the handling mechanism, in that the moving armature presents a polygonal form, in that the housing (3) of the base (4) presents a complementary form and carries in regard to at least certain sides of the moving armature, the end of stroke contacts (5,6,7,8), and in that it includes the elastic return means of the moving armature in a central position in the base housing (4).

2. Multifunctional actuator according to claim 1, characterised in that the moving armature presents an octagonal form.

3. Multifunctional actuator according to any of the preceding claims, characterised in that the moving armature (2) includes an interrupter with axial movement (1) linked to the handling mechanism.

4. Multifunctional actuator according to any of the preceding claims, characterised in that the handling mechanism includes a knurled nut (1).

5. Multifunctional actuator according to claim 4, characterised in that the knurled nut has notches.

6. Multifunctional actuator according to any of the preceding claims, characterised in that the return means are formed by return springs of the end of stroke contacts (5,6,7,8).

7. Multifunctional actuator according to any of claims 1 to 5, characterised in that the return means are formed by elastic means interposed between the base (4) and the moving armature (2).

8. Multifunctional actuator according to any of the preceding claims, characterised in that the moving armature includes sliding pads (9,10).
